# EUROPÄISCHE PATENTSCHRIFT

(11) **EP 4 302 592 B1**
(45) Veröffentlichungstag und Bekanntmachung des Hinweises auf die Patenterteilung: **05.03.2025**
(21) Anmeldenummer: 22182941.9
(22) Anmeldetag: 05.07.2022
(51) Int. Cl.: A01G 9/24, A01G 31/06

(54) **GEWÄCHSHAUSANORDNUNG**
GREENHOUSE ARRANGEMENT
ENSEMBLE SERRE

(43) Veröffentlichungstag der Anmeldung: 10.01.2024
(73) Patentinhaber: Jungheinrich Aktiengesellschaft, 22047 Hamburg (DE)
(72) Erfinder: Rollwa, Volker, 66953 Pirmasens (DE); Liebhaber, Markus, 61440 Oberursel (DE)
(74) Vertreter: Keil & Schaafhausen Patentanwälte PartGmbB

(56) Entgegenhaltungen:
- EP-A1- 1 464 219
- EP-B1- 0 767 887
- JP-A- 2000 050 744
- KR-A- 20110 079 023
- US-A1- 2020 236 871

## Beschreibung

Die vorliegende Erfindung betrifft eine Gewächshausanordnung mit einem Gehäuse, einem im Gehäuse angeordneten Innenraum, mehreren in Schwerkraftrichtung im Innenraum übereinander angeordneten Pflanzetagen, einer auf die Pflanzetagen wirkenden Beleuchtungsanordnung und einer Luftversorgung, wobei die Luftversorgung einen Luftverteilraum aufweist.

Eine derartige Gewächshausanordnung ist aus KR 2011 007 9023 A bekannt.

Weiterhin betrifft die Erfindung ein Verfahren zum Belüften einer Gewächshausanordnung mit einem Gehäuse, einem im Gehäuse angeordneten Innenraum, mehreren in Schwerkraftrichtung im Innenraum übereinander angeordneten Pflanzetagen und einer auf die Pflanzetagen wirkenden Beleuchtungsanordnung.

In einer derartigen Gewächshausanordnung können in mehreren Ebenen übereinander Pflanzen herangezogen werden, so dass man auf einer relativ geringen Grundfläche einen relativ hohen Ernteertrag erzielen kann. Die Pflanzen können hierbei auf Trägern angeordnet werden. Mehrere Träger werden dann im Gehäuse übereinander angeordnet. Da die Pflanzen Licht zum Wachsen benötigen, sind zwischen den Trägern oder auf andere Weise Beleuchtungseinrichtungen angeordnet. Das Gehäuse kann beispielsweise ein Gestell aufweisen, dessen Seiten mit Paneelen oder anderen flächigen Elementen abgedeckt sind, um einen geschlossenen Innenraum zu erhalten, in dem ein für das Pflanzenwachstum günstiges Klima erzeugt und aufrechterhalten werden kann.

Die Pflanzen benötigen zum Wachstum in der Regel Luft, insbesondere das in der Luft enthaltene Kohlendioxid. Gleichzeitig sollte die Luft auch eine Temperatur und eine relative Feuchtigkeit aufweisen, die den Bedürfnissen der Pflanze entspricht. Dementsprechend weist die Gewächshausanordnung eine Luftversorgung auf, mit der fortlaufend oder in Intervallen Luft in den Innenraum verbracht werden kann.

Kritisch bei einer derartigen Gewächshausanordnung ist, dass die Beleuchtungsanordnung nicht nur Licht produziert, sondern auch Wärme. Auch wenn man hier Beleuchtungseinrichtungen verwendet, die nur wenig Wärme produzieren, lässt sich eine gewisse Wärmeabgabe nicht vermeiden. Dementsprechend muss die Luftversorgung für eine gewisse Umwälzung der im Innenraum vorhandenen Luft sorgen.

Bei dieser Luftumwälzung sollte allerdings eine Zugluft vermieden werden, weil Pflanzen auf eine derartige Zugluft vielfach ungünstig reagieren.

EP 0 767 887 B1 zeigt eine Vorrichtung zum Verteilen von Luft in einem Raum, bei der man eine Druckkammer verwendet, die eine großflächige Luftaustrittsöffnung und eine Lufteintrittsöffnung aufweist. Die Luftaustrittsöffnung ist von einem luftdurchlässigen Gewebe abgedeckt. Diese Gewebe weist zwei mit Abstand zueinander angeordnete Gewebelagen auf. Die Gewebelagen sind an ihren Rändern miteinander verbunden und bilden einen Gewebesack, in dem ein Spannrahmen angeordnet ist.

EP 1 464 219 A1 zeigt ein Klimagerät sowie ein Klimatisierungsverfahren für die Pflanzenzucht. Hier wird ein Luftstrom unter einer luftdurchlässigen Abdeckung mit Öffnungen hindurchgeleitet, wobei die Luft dann zu Pflanzen gelangen kann.

JP 2000-0050744 A zeigt ein einfaches Gebäude mit einer Außenwand, die aus drei Filmen gebildet ist, wobei ein innerer Film luftdurchlässig ist, während die beiden äußeren Filme luftundurchlässig sind. Damit wird eine Möglichkeit geschaffen, durch Aufblasen der zwischen den drei Filmen gebildeten zwei Kammern das Gebäude aufzurichten und in der aufgerichteten Position zu halten. Zusätzlich können noch Verstärkungsrippen vorgesehen sein.

US 2020/0236871 A1 zeigt ein Verfahren und ein System zur Luftkonditionierung von geschlossenen Umgebungen, insbesondere für vertikale Farmen. Hier wird Luft in einen Raum eingeleitet und durch eine luftdurchlässige Wand in einen Gewächshausraum eingeleitet. Auf der gegenüberliegenden Seite wird sie durch ebenfalls eine luftdurchlässige Wand wieder in einen Austrittsraum geleitet. Die vertikalen Wände weisen Öffnungen auf, so dass sie mikro-perforiert sind.

Der Erfindung liegt die Aufgabe zugrunde, günstige klimatische Bedingungen im Innenraum zu erzeugen.

Diese Aufgabe wird bei der Gewächshausanordnung gemäß Anspruch 1 dadurch gelöst, dass der Luftverteilraum mit einer luftdurchlässigen Membran an den Innenraum angrenzt, wobei eine Luftleitung mit einer Strömungsrichtung in den Verteilraum mündet, die eine senkrecht zur Strömungsrichtung gerichtete Prallplatte aufweist.

Die Membran ist zwar luftdurchlässig, weist andererseits aber auch einen gewissen Luftwiderstand auf. Luft, die in den Verteilraum eingebracht wird, kann also nicht ohne weiteres in Form eines Luftstrahls in den Innenraum übertreten. Vielmehr baut sich im Verteilraum ein relativ gleichmäßiger Luftdruck auf, der etwas höher ist als der Luftdruck im Innenraum. Mit Hilfe des Druckunterschieds zwischen dem Luftdruck im Verteilraum und dem Luftdruck im Innenraum wird die im Verteilraum befindliche Luft durch die Membran in den Innenraum gedrückt. Damit ergibt sich eine über die Fläche der Membran verteilte Luftströmung, also eine Luftströmung mit einem sehr großen Querschnitt. Es kann also sehr viel Luft in den Innenraum gefördert werden, ohne dass es zu einer Zugluft kommt.

Die die Membran durchströmende Luft hat eine relativ geringe Geschwindigkeit von unterhalb 0,5 m/s. Eine derartige Strömungsgeschwindigkeit der Luft ist für die meisten Pflanzen beim Wachstum noch akzeptabel.

Die Luft kann aus der Luftleitung nicht in Form eines direkten Strahls austreten, sondern der Luftstrom, der durch die Luftleitung in den Verteilraum eingeleitet wird, wird durch die Prallplatte abgebremst und in viele Richtungen verteilt, so dass die Belastung der Membran durch einen gerichteten Luftstrom praktisch vermieden werden kann. Vielmehr wird im Verteilraum ein Luftvolumen mit einem höheren Druck erzeugt.

Vorzugsweise weist die Luftleitung im Verteilraum einen Diffusor auf. Der Diffusor ist so angeordnet, dass er die auf die Prallplatte auftreffende Luft verteilen kann. Auch der Diffusor trägt dann zu einer gleichmäßigen Verteilung der in den Verteilraum eingespeisten Luft bei.

Vorzugsweise weist der Diffusor mehrere in einer Umfangsrichtung der Luftleitung angeordnete Öffnungen auf. Durch diese Öffnungen kann die durch die Luftleitung in den Verteilraum eingespeiste Luft über den Umfang der Luftleitung im Verteilraum gleichmäßig verteilt ausgestoßen werden.

Hierbei ist bevorzugt, dass die Öffnungen schlitzartig ausgebildet sind. Damit steht eine relativ große Durchtrittsfläche zur Verfügung, ohne dass es hier zu gerichteten Strahlen kommt, die auf die Membran treffen könnten.

Vorzugsweise weist die Membran textiles Material als Hauptbestandteil auf. Das textile Material kann beispielsweise gewebt oder gewirkt sein oder es kann sich um ein Vlies handeln. Bei einem textilen Material kann man den Durchtrittswiderstand für Luft relativ genau einstellen. Die Luftdurchlässigkeit kann sich durch das Material selbst ergeben. Es ist aber auch möglich, die Luftdurchlässigkeit durch eine Perforation zu erreichen oder durch eine Perforation zu modifizieren.

Vorzugsweise weist die Membran an zwei parallelen Kanten eine Verdickung auf, die mit parallelen Kanälen im Gehäuse in Eingriff stehen. Dann kann man die Membran leicht austauschen. Man muss lediglich die Verdickung aus den Kanälen herausziehen und dann eine neue Membran mit gleichartigen Verdickungen in die Kanäle einführen. Die Kanäle können beispielsweise an einer so genannten "Keder-Leiste" ausgebildet sein. Die Verdickung kann als Keder-Profil ausgebildet sein.

Hierbei ist bevorzugt, dass die Verdickung an einem mit der Membran verbundenen Halteelement angeordnet ist. Das Halteelement kann dann beispielsweise als Keder-Band ausgebildet sein, das mit der Membran vernäht oder verklebt ist.

Vorzugsweise weist das Gehäuse Ständer auf und die Kanäle sind in oder an den Ständern angeordnet. Die Ständer können beispielsweise als Aluminium-Extrusionsprofile ausgebildet sein, bei denen man die Kanäle gleich miterzeugen kann.

Vorzugsweise weist der Verteilraum mehrere Verteilraumabschnitte auf, die nebeneinander an einer Seite des Innenraums angeordnet sind. Damit wird der Verteilraum an einer Seite des Innenraums in mehrere kleinere Volumina unterteilt, bei denen es einfacher ist, eine gleichmäßige Druckverteilung sicherzustellen. Die Luftleitung hat dann für jeden Verteilraumabschnitt eine eigene Einspeisung. Beispielsweise kann ein Luftkanal an allen Verteilraumabschnitten vorbeigeführt werden, der dann für jeden Verteilraumabschnitt eine eigene Abzweigung aufweist, die die Luftleitung für den jeweiligen Verteilerabschnitt bildet.

Vorzugsweise weist jeder Verteilraumabschnitt eine luftundurchlässige Außenwand außerhalb der luftdurchlässigen Membran auf. Die gesamte in den Verteilraumabschnitt eingespeiste Luft kann dann nur über die Membran austreten, und damit nur in den Innenraum gelangen. Dies ist eine energetisch günstige Lösung, weil praktisch keine zugeführte Luft verschwendet wird.

Vorzugsweise ist die Außenwand gekrümmt. Eine gekrümmte Außenwand lässt sich auf relativ einfache Weise gegen die auftretenden Drücke stabil halten. Damit werden die Kosten für den Verteilraum kleingehalten.

Hierbei ist besonders bevorzugt, dass die Außenwand ein Teil einer Zylindermantelfläche bildet. Die Zylindermantelfläche kann insbesondere die Mantelfläche eines Kreiszylinders sein.

Vorzugsweise ist der Verteilraum ein erster Verteilraum und die Luftleitung ist eine erste Luftleitung und ein zweiter Verteilraum mit einer zweiten Luftleitung ist auf einer gegenüberliegenden Seite des Innenraums angeordnet. Die Luft, die in den Innenraum eingespeist wird, kann auf der dem ersten Verteilraum gegenüberliegenden Seite dann durch den zweiten Verteilraum entweichen und durch die zweite Luftleitung abgenommen werden. Es ist damit möglich, auch die austretende Luft beispielsweise wieder zu verwenden, was insbesondere günstig ist, wenn die Gewächshausanordnung ansonsten in einer Umgebung mit verschmutzter Luft betrieben wird, oder man kann die austretende Luft zu Regelungszwecken verwenden.

In einer bevorzugten Ausgestaltung ist vorgesehen, dass die erste Luftleitung und die zweite Luftleitung über eine Umschalteinrichtung mit einer gemeinsamen Luftfördereinrichtung verbunden sind. Die beiden Verteilräume können dann abwechselnd verwendet werden, um Luft in den Innenraum einzuspeisen.

Wenn man vom ersten Verteilraum zum zweiten Verteilraum übergeht, um die Luft einzuspeisen, strömt die Luft von dem ersten Verteilraum zum zweiten Verteilraum. Wenn man dann die Lufteinspeisung am zweiten Verteilraum vornimmt, dreht sich die Luftströmung im Innenraum um. Damit werden im Mittel gleichmäßigere Temperaturverhältnisse für die Pflanzen im Innenraum erzielt. Auch bei einer Luftströmung kann man nicht vermeiden, dass sich die eingespeiste Luft etwas erwärmt. Dies führt dann dazu, dass die Pflanzen, die am weitesten weg von dem ersten Verteilraum sind, auf Dauer einer höheren Temperatur ausgesetzt sind als die dem ersten Verteilraum benachbarten Pflanzen. Wenn man nun die Lufteinspeisung abwechselnd durch den ersten Verteilraum und durch den zweiten Verteilraum vornimmt, dann werden alle Pflanzen im Mittel zumindest annähernd mit der gleichen Temperatur beaufschlagt.

Die Aufgabe wird bei dem Verfahren gemäß Anspruch 11 dadurch gelöst, dass man Luft in einen an den Innenraum angrenzenden Verteilraum einspeist und durch eine luftdurchlässige Membran in den Innenraum leitet.

Mit dieser Vorgehensweise ist es möglich, im Innenraum den notwendigen Luftaustausch vorzunehmen, ohne das es zu einer scharfen Luftströmung, einer sogenannten "Zugluft", kommt, die von vielen Pflanzen nicht gut vertragen wird. Die in den Verteilraum eingespeiste Luft kann nicht unmittelbar in den Innenraum übertreten, weil die Membran hier einen gewissen Strömungswiderstand bildet. Die Membran sorgt dafür, dass sich im Verteilraum ein gleichmäßiger Luftdruck aufbauen kann, der geringfügig höher ist, als der Luftdruck im Innenraum. Der Druckunterschied sorgt dann dafür, dass die in den Verteilraum eingespeiste Luft durch die Membran großflächig verteilt in den Innenraum übertreten kann.

Vorzugsweise richtet man die Luft im Verteilraum gegen eine Prallplatte. Die Membran wird damit vor einem gerichteten Luftstrom geschützt. Damit kann einer Beschädigung der Membran vorgebeugt werden.

Vorzugsweise verteilt man die Luft im Verteilraum durch einen Diffusor. Dies ist eine einfache Maßnahme, um die Luft im Verteilraum schnell und gleichmäßig zu verteilen.

Bevorzugterweise kehrt man die Luftströmung im Innenraum von Zeit zu Zeit um. Auch bei einem kontrollierten Luftaustausch im Innenraum lässt es sich nicht vermeiden, dass die den Innenraum durchströmende Luft sich erwärmt. Durch die Richtungsänderung der Luftströmung im Innenraum kann man erreichen, dass die Pflanzen jedenfalls im Mittel immer einer im Wesentlichen gleichförmigen Temperatur ausgesetzt sind. Die Richtungsänderung lässt sich auf einfache Weise dadurch bewerkstelligen, dass man an gegenüberliegenden Seiten des Innenraums jeweils einen Verteilraum anordnet und die Verteilräume abwechselnd, beispielsweise unter Zuhilfenahme von Ventilen, mit Zuluft versorgt.

Die Erfindung wird im Folgenden anhand eines bevorzugten Ausführungsbeispiels in Verbindung mit der Zeichnung beschrieben. Hierin zeigen:
- Fig. 1: eine schematische Darstellung einer Gewächshausanordnung, teilweise im Aufriss,
- Fig. 2: eine vergrößerte Darstellung eines Verteilraums,
- Fig. 3: eine schematische Darstellung für die Befestigung einer Membran am Gehäuse und
- Fig. 4: eine schematische Darstellung zur Erläuterung einer Luftströmung durch die Gewächshausanordnung.

In allen Figuren sind gleiche und einander entsprechende Elemente mit den gleichen Bezugszeichen versehen.

Eine Gewächshausanordnung 1 weist ein Gehäuse 2 auf, in dem in Schwerkraftrichtung übereinander mehrere Pflanztröge 3 angeordnet sind. In den Pflanztrögen werden Pflanzen, beispielsweise Salatpflanzen, herangezogen.

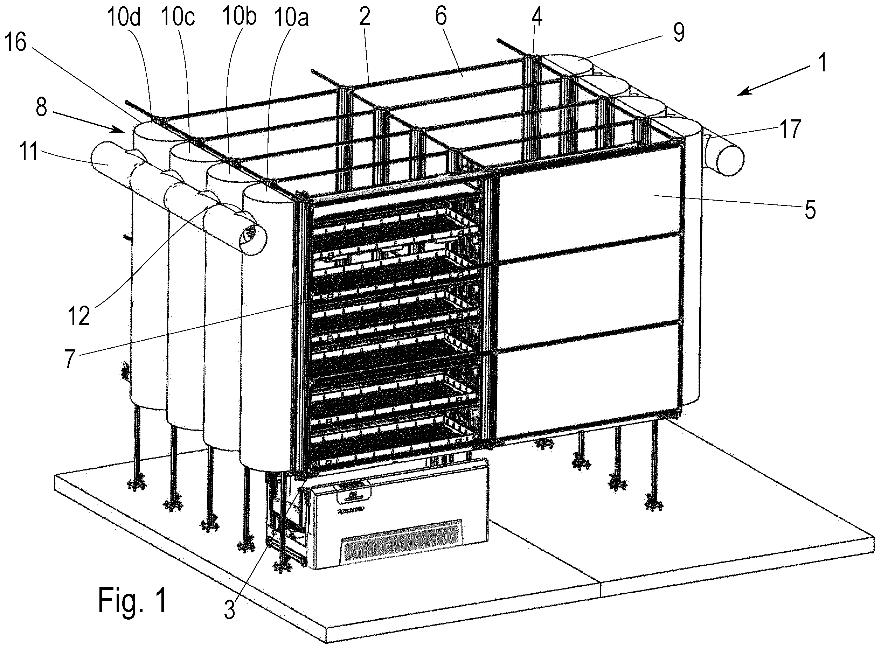

Das Gehäuse 2 weist mehrere Ständer 4 auf, die einerseits die Pflanzschalen 3 tragen, andererseits auch zur Befestigung von Wandabschnitten 5 dienen. Auch vor den Pflanzschalen 3 sind derartige Wandabschnitte vorhanden. Sie sind aber in Fig. 1 entfernt, um die Pflanzschalen 3 zeigen zu können. Die Wandabschnitte umgeben einen Innenraum 6. Am in Schwerkraftrichtung oberen Ende des Innenraums 6 können Pflanzschalen 3 ohne Pflanzen oder entsprechend "abgespeckte" Träger angeordnet sein, die den Innenraum abdecken. Es ist nicht erforderlich, dass sie den Innenraum 6 luftdicht abschließen. Der Innenraum 6 ist an seiner Unterseite durch die untersten Pflanzenschalen 3 weitgehend abgeschlossen, wobei auch hier ein luftdichter Abschluss nicht erforderlich ist. Die Pflanzenschalen 3 können auch unmittelbar übereinander gestapelt werden.

Die Pflanzschalen 3 und die am oberen Ende des Innenraums 6 angeordnete Träger weisen Beleuchtungseinrichtungen 7 auf, mit denen die jeweils unter einer Pflanzschale 3 angeordneten Pflanzen beleuchtet werden können. Eine nicht näher dargestellte Nährstoffversorgung ist vorgesehen, um den Pflanzschalen 3 Nährflüssigkeit, in der Regel Wasser mit einem Düngemittel, zuzuführen.

Neben Licht, Wasser und Nährstoffen benötigen die Pflanzen auch Luft zum Wachsen. Aus diesem Grund sind an zwei einander gegenüberliegenden Seiten des Innenraums Luftversorgungseinrichtungen 8, 9 angeordnet, die spiegelverkehrt etwa gleich ausgebildet sind. Aus diesem Grund wird im Folgenden nur die Luftversorgungseinrichtung 8 näher erläutert. Die beiden Luftversorgungseinrichtungen 8, 9 bilden zusammen mit einer nicht näher dargestellten Luftquelle, beispielsweise einem Gebläse, eine Luftversorgung.

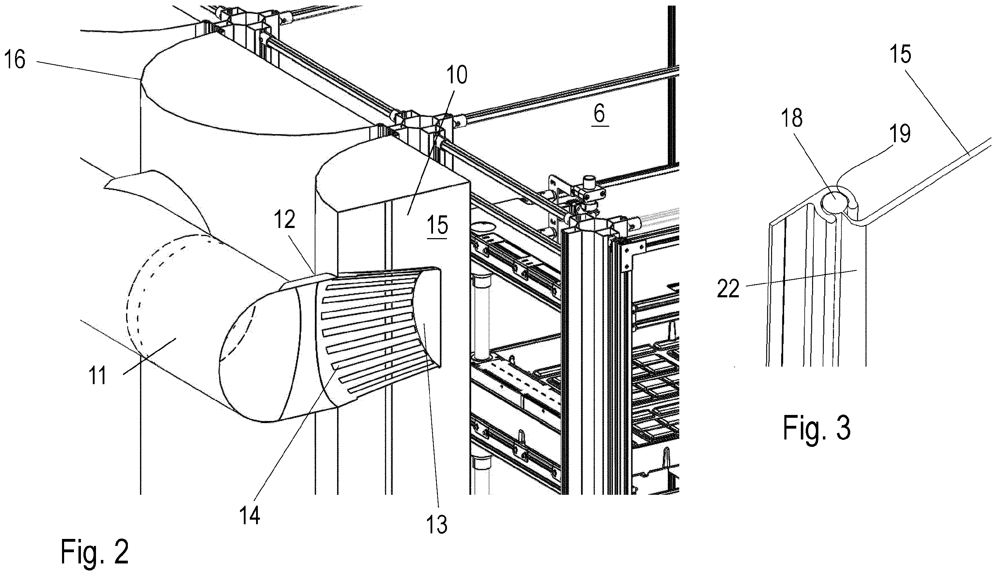

Die Luftversorgungseinrichtung 8 weist mindestens einen Verteilraum 10 auf (Fig. 2). Der Luftverteilraum 10 wird auch als erster Luftverteilraum bezeichnet, um ihn von den entsprechenden zweiten Luftverteilräumen der zweiten Luftverteileinrichtung 9 unterscheiden zu können. Der Luftverteilraum 10 ist in mehrere Verteilraumabschnitte 10a-10d unterteilt, die jeweils geschlossen sind. Die Luftverteilabschnitte 10a-10d (Fig. 1) sind im Wesentlichen gleich ausgebildet, so dass im Folgenden nur der Verteilraum 10 anhand von Fig. 2 erläutert wird.

Die erste Luftversorgungseinrichtung 8 weist einen Luftkanal 11 auf, von dem eine Luftleitung 12 abzweigt, die in den Verteilraum 10 eintritt. Die Luftleitung 12 verläuft im Wesentlichen rechtwinklig zum Luftkanal 11. Dies ist aber nicht zwingend. Die Luftleitung 12 weist an ihrer Stirnseite, die im Verteilraum 10 endet, eine Prallplatte 13 auf, die senkrecht oder quer zur Strömungsrichtung durch die Luftleitung 12 gerichtet ist. In ihrer Umfangswand im Verteilraum 10 weist die Luftleitung eine Vielzahl von Öffnungen 14 auf, die in der Umfangswand vorzugsweise gleichmäßig verteilt angeordnet sind. Die Öffnungen 14 sind schlitzartig ausgebildet, d.h. sie haben in Strömungsrichtung eine wesentlich größere Länge als eine Breite in Umfangsrichtung der Luftleitung 12.

Der Verteilraum 10 grenzt an den Innenraum 6 mit einer Membran 15 an. Die Membran 15 ist luftdurchlässig ausgebildet. Der Verteilraum 10 weist im Übrigen eine Außenwand 16 auf, die luftundurchlässig ist. Die Außenwand 16 ist gekrümmt, und zwar vorzugsweise in Form eines Teils einer Zylindermantelfläche und besonders bevorzugt in Form eines Teils einer Kreiszylindermantelfläche.

Die Membran 15 ist zwar luftdurchlässig, setzt der hindurchtretenden Luft aber einen gewissen Strömungswiderstand entgegen. Die durch die Luftleitung 12 in den Verteilraum 10 eingeführte Luft trifft zunächst auf die Prallplatte 13 und verteilt sich dann durch die Öffnungen 14 um die Luftleitung 12 herum. Die Öffnungen 14 bilden einen Diffusor. Die durch die Luftleitung 12 zugeführte Luft kann sich dann gleichmäßig im Verteilraum 10 verteilen und bildet ein Luftvolumen mit einem im Wesentlichen gleichmäßigen Druck über das gesamte Luftvolumen. Dieser Druck ist etwas höher als der Luftdruck im Innenraum 6. Diese Druckdifferenz bewirkt, dass Luft vom Verteilraum 10 in den Innenraum 6 übertritt. Dadurch ergibt sich eine Luftströmung zur Luftversorgungseinrichtung 9 auf der gegenüberliegenden Seite, wo die Luft, die den Innenraum durchströmt hat, wieder entfernt werden kann. Die Strömungsgeschwindigkeit ist hierbei relativ niedrig. Sie liegt bei unter 0,5 m/s.

Die Luftleitung 12 ist in Schwerkraftrichtung in der oberen Hälfte, vorzugsweise sogar im oberen Viertel, des Verteilraums 10 angeordnet. Die zugeführte Luft ist in der Regel etwas kälter als die im Innenraum 6 befindliche Luft, weil die im Innenraum 6 befindliche Luft durch die Leuchteinrichtungen 7 erwärmt wird. Dementsprechend kann die zugeführte Luft im Verteilraum 10 auch nach unten absinken. Wenn die zugeführte Luft hingegen den Innenraum durchströmt hat und die zweite Luftversorgungseinrichtung 9 erreicht, dann kann sie dort aufgrund der erhöhten Temperatur aufsteigen und wiederum durch die dort angeordnete zweite Luftleitung 17 abgeführt werden.

In den Fig. 1 und 2 ist dargestellt, dass der Luftkanal 11 zu seiner Stirnseite hin offen ist. Diese Darstellung wurde gewählt, um das "Innere" des Luftkanals 11 und der Luftleitung 12 zu zeigen. In Wirklichkeit ist der Luftkanal 11 hier verschlossen, um einen Austritt von Luft hier zu verhindern.

Die Membran 15 ist aus einem textilen Material als Hauptbestandteil gebildet. Das textile Material kann gewebt oder gewirkt sein. Es kann sich auch um ein Vlies handeln. Bei Verwendung eines textilen Materials als Hauptbestandteil der Membran 15 lässt sich der Strömungswiderstand der Membran 15 relativ genau einstellen. Gegebenenfalls kann man die Membran auch noch mit kleinen Öffnungen in Form einer Perforation versehen, um den Strömungswiderstand genau einzustellen.

Zur Befestigung der Membran 15 weist die Membran 15 an ihren beiden Längsseiten eine Verdickung 18 auf, beispielsweise in Form eines Keder-Profils. Diese Verdickung 18 wird in einen entsprechenden Kanal 19 an einem Ständer 4 eingesetzt. Es kann beispielsweise von oben in das Profil 19 eingefädelt werden. Damit ergibt sich eine formschlüssige Verbindung zwischen der Membran 15 und einem Ständer 4. Die Verdickung muss nicht Bestandteil der Membran 15 sein. Die Verdickung 18 kann auch an einem Halteelement 22 angeordnet sein, das mit der Membran vernäht oder verklebt ist.

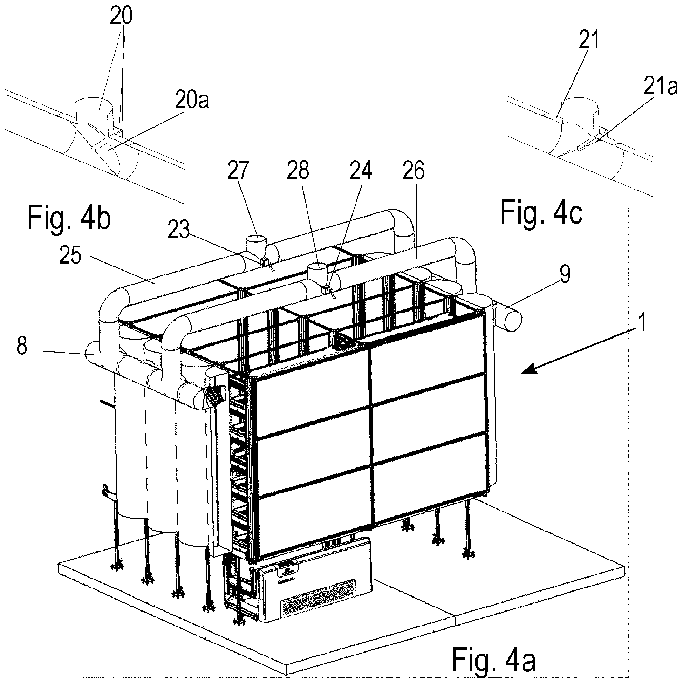

Da die beiden Luftversorgungseinrichtungen 8, 9 im Wesentlichen gleich ausgebildet sind, lassen sich beide Luftversorgungseinrichtungen 8, 9 abwechselnd zur Einspeisung von Luft in den Innenraum 6 verwenden. Dies wird anhand von Fig. 4 erklärt.

Fig. 4a zeigt die Ansicht von Fig. 1, bei der die beiden Luftversorgungseinrichtungen 8, 9 durch Leitungen 25, 26 miteinander verbunden sind. Die Leitung 25 weist im vorliegenden Beispiel einen Zuluftstutzen 27 auf, der über ein Umschaltventil 20 in die Leitung 25 mündet. Die Leitung 26 weist einen Abluftstutzen 28 auf, der über ein Ventil 21 in die Leitung 26 mündet. Das Ventil 20 weist eine Klappe 20a auf, mit der Zuluft entweder zu der Luftversorgungseinrichtung 8 oder zur Luftversorgungseinrichtung 9 geleitet werden kann. Das Ventil 21 weist eine Klappe 21a auf, mit der Abluft entweder von der Luftversorgungseinrichtung 9 oder von der Luftversorgungseinrichtung 8 in den Abluftstutzen 28 geleitet werden kann. Die beiden Ventile 20, 21 weisen jeweils einen Stellmotor 23, 24 auf, wobei die Stellmotoren 23, 24 miteinander synchronisiert werden können.

Wenn sich die Klappe 20a in der in Fig. 4b gezeigten Position und die Klappe 21a in der in Fig. 4c gezeigten Position befindet, erfolgt die Einspeisung von Luft über die erste Luftverteilungseinrichtung 8 und die Abnahme der Luft erfolgt über die zweite Luftverteilungseinrichtung 9. Wenn sich die beiden Klappen 20a, 21a jeweils in ihrer anderen Position befinden, erfolgt die Einspeisung von Luft über die zweite Luftverteilungseinrichtung 9 und die Abnahme der Luft erfolgt über die erste Luftverteilungseinrichtung 8.

Die Umschaltung zwischen den beiden Strömungsrichtungen kann beispielsweise alle sechzig Minuten erfolgen.

Man kann die Luftfördereinrichtung auch noch zusätzlich oder alternativ mit einer Saugeinrichtung versehen, so dass man die Strömung durch den Innenraum auch oder zusätzlich durch Saugen erzeugen kann.

In der Luftströmung außerhalb des Innenraums 6 kann noch ein Wärmetauscher vorgesehen sein, der die Luft, wenn man sie zirkulieren lässt, wieder abkühlt, also die durch die Beleuchtungseinrichtungen 7 hervorgerufene Erwärmung wieder beseitigt.

Mit der dargestellten Luftströmung lässt sich eine relativ gute Temperatursteuerung erreichen. Bei einer Strömungslänge von beispielsweise 6000 mm und einer Erstreckung, entlang derer die beiden Luftverteilungseinrichtungen 8, 9 angeordnet sind, von etwa 940 mm sowie einer Höhe von beispielsweise 14000 mm lässt sich eine Strömungsgeschwindigkeit zwischen den beiden Luftverteilungseinrichtungen 8, 9 von etwa 0,3 m/s erreichen. Hierbei herrscht in den Verteilraumabschnitten 10 a-d ein Luftdruck von etwa 300 Pa.

Damit ergibt sich auf der Seite der einströmenden Luft eine leicht niedrigere Temperatur als auf der Seite der ausströmenden Luft. Allerdings sind die Temperaturunterschiede nicht sehr groß. Sie liegen im Wesentlichen im Bereich von 0 bis 5° C.

## Patentansprüche

1. Gewächshausanordnung (1) mit einem Gehäuse (2), einem im Gehäuse (2) angeordneten Innenraum (6), mehreren in Schwerkraftrichtung im Innenraum (6) übereinander angeordneten Pflanzetagen (3), einer auf die Pflanzetagen (3) wirkenden Beleuchtungsanordnung (7) und einer Luftversorgung (8, 9), wobei die Luftversorgung (8, 9) mindestens einen Luftverteilraum (10; 10a-10d) aufweist, **dadurch gekennzeichnet, dass** der Luftverteilraum (10; 10a-10d) mit einer luftdurchlässigen Membran (15) an den Innenraum (6) angrenzt, wobei eine Luftleitung (12) mit einer Strömungsrichtung in den Verteilraum (10) mündet, die eine senkrecht zur Strömungsrichtung gerichtete Prallplatte (13) aufweist.

2. Gewächshausanordnung nach Anspruch 1, **dadurch gekennzeichnet, dass** die Luftleitung (12) im Verteilraum (10) einen Diffusor aufweist, der insbesonder mehrere in einer Umfangswand der Luftleitung (12) angeordnete Öffnungen (14) aufweist, die bevorzugterweise (14) schlitzartig ausgebildet sind.

3. Gewächshausanordnung nach Anspruche 1 oder 2, **dadurch gekennzeichnet, dass** die Membran (15) textiles Material als Hauptbestandteil aufweist.

4. Gewächshausanordnung nach einem der Ansprüche 1 bis 3, **dadurch gekennzeichnet, dass** die Membran (15) an zwei parallelen Kanten eine Verdickung (18) aufweist, die mit parallelen Kanälen (19) im Gehäuse (2) in Eingriff stehen.

5. Gewächshausanordnung nach Anspruch 4, **dadurch gekennzeichnet, dass** die Verdickung (18) an einem mit der Membran (15) verbundenen Halteelement angeordnet ist.

6. Gewächshausanordnung nach Anspruch 3 oder 4, **dadurch gekennzeichnet, dass** das Gehäuse (2) Ständer (4) aufweist und die Kanäle (19) in Ständern (4) angeordnet sind.

7. Gewächshausanordnung nach einem der Ansprüche 1 bis 6, **dadurch gekennzeichnet, dass** der Verteilraum (10) mehrere Verteilraumabschnitte (10a-10d) aufweist, die nebeneinander an einer Seite des Innenraums (6) angeordnet sind.

8. Gewächshausanordnung nach Anspruch 7, **dadurch gekennzeichnet, dass** jeder Verteilraumabschnitt (10a-10d) eine luftundurchlässige Außenwand (16) außerhalb der luftdurchlässigen Membran (15) aufweist, die insbesondere (16) gekrümmt ist und bevorzugterweise einen Teil einer Zylindermantelfläche bildet.

9. Gewächshausanordnung nach einem der Ansprüche 1 bis 8, **dadurch gekennzeichnet, dass** der Verteilraum (10) eine erster Verteilraum und die Luftleitung (12) eine erste Luftleitung ist und ein zweiter Verteilraum mit einer zweiten Luftleitung (17) auf einer der gegenüberliegenden Seiten des Innenraums (6) angeordnet ist.

10. Gewächshausanordnung nach Anspruch 9, **dadurch gekennzeichnet, dass** die erste Luftleitung (12) und die zweite Luftleitung (17) über eine Umschalteinrichtung (20, 21) mit einer gemeinsamen Luftfördereinrichtung verbunden sind.

11. Verfahren zum Belüften einer Gewächshausanordnung (1) mit einem Gehäuse (2), einem im Gehäuse (2) angeordneten Innenraum (6), mehreren in Schwerkraftrichtung im Innenraum (6) übereinander angeordneten Pflanzetagen (3) und einer auf die Pflanzetagen (3) wirkenden Beleuchtungsanordnung (7), wobei man Luft in einen an den Innenraum (6) angrenzenden Verteilraum (10; 10a-10d) einspeist, **dadurch gekennzeichnet, dass** die Luft durch eine luftdurchlässige Membran aus dem Luftverteilraum (10; 10a-10d) in den Innenraum (6) leitet, wobei man die Luft im Verteilraum (10; 10a-10d) gegen eine Prallplatte (13) richtet.

12. Verfahren nach Anspruch 11, **dadurch gekennzeichnet, dass** man die Luft im Verteilraum (10; 10a-10d) durch einen Diffusor verteilt.

13. Verfahren nach Anspruche 11 oder 12, **dadurch gekennzeichnet, dass** man die Luftströmung im Innenraum (6) von Zeit zu Zeit umkehrt.

## Claims

1. Greenhouse arrangement (1) having a housing (2), an inner space (6) arranged in the housing (2), a plurality of plant levels (3) arranged one above the other in the direction of gravity in the inner space (6), a lighting arrangement (7) and an air supply (8, 9), the air supply (8, 9) having at least one air distribution chamber (10; 10a-10d), **characterized in that** the air distribution chamber (10; 10a-10d) adjoins the inner space (6) by means of an air-permeable membrane (15), wherein an air duct (12) opens into the distribution chamber (10) with a flow direction, which distribution chamber has a baffle plate (13) directed perpendicular to the flow direction.

2. Greenhouse arrangement according to claim 1, **characterized in that** the air duct (12) has a diffuser in the distribution space (10), which diffuser has, in particular, a plurality of openings (14) which are arranged in a peripheral wall of the air duct (12) and are preferably (14) of slot-like design.

3. Greenhouse arrangement according to claims 1 or 2, **characterized in that** the membrane (15) has textile material as main constituent.

4. Greenhouse arrangement according to one of claims 1 to 3, **characterized in that** the membrane (15) has a thickened portion (18) on two parallel edges, which are in engagement with parallel channels (19) in the housing (2).

5. Greenhouse arrangement according to claim 4, **characterized in that** the thickened portion (18) is arranged on a holding element connected to the membrane (15).

6. Greenhouse arrangement according to claim 3 or 4, **characterized in that** the housing (2) has uprights (4) and the channels (19) are arranged in uprights (4).

7. Greenhouse arrangement according to one of claims 1 to 6, **characterized in that** the distribution space (10) has a plurality of distribution space sections (10a-10d) which are arranged next to one another on one side of the inner space (6).

8. Greenhouse arrangement according to claim 7, **characterized in that** each distribution space section (10a-10d) has an air-impermeable outer wall (16) outside the air-permeable membrane (15), which outer wall (16) is curved in particular and preferably forms part of a cylinder outer surface.

9. Greenhouse arrangement according to one of claims 1 to 8, **characterized in that** the distribution space (10) is a first distribution space and the air duct (12) is a first air duct, and a second distribution space with a second air duct (17) is arranged on one of the opposite sides of the inner space (6).

10. Greenhouse construction according to claim 9, **characterized in that** the first air duct (12) and the second air duct (17) are connected to a common air supply means via a switch-over means (20, 21).

11. Method for ventilating a greenhouse arrangement (1) having a housing (2), an inner chamber (6) arranged in the housing (2), a plurality of plant levels (3) arranged one above the other in the direction of gravity in the inner chamber (6) 3) and a lighting arrangement (7) acting on the plant levels (3), air being supplied to a distribution space (10; 10a-10d) adjoining the interior space (6), **characterized in that** the air is conducted through an air-permeable membrane from the air distribution chamber (10; 10a-10d) into the inner space (6), the air in the distribution chamber (10; 10a-10d) being directed towards a baffle plate (13).

12. The method according to claim 11, **characterized in that** the air in the distribution space (10; 10a-10d) is distributed by means of a diffuser.

13. The method according to claim 11 or 12, **characterized in that** the air flow in the inner space (6) is reversed from time to time.

## Revendications

1. Ensemble serre (1) avec une enceinte (2), un compartiment intérieur (6) disposé dans l'enceinte (2), plusieurs étages de plants (3) disposés les uns sur les autres en direction de la force de gravité dans le compartiment intérieur (6), un système d'éclairage (7) agissant sur les étages de plants (3), et une alimentation d'air (8, 9), sachant que l'alimentation d'air (8, 9) comporte au moins un compartiment de diffusion d'air (10 ; 10a-10d), ***caractérisé en ce que*** le compartiment de diffusion d'air (10 ; 10a-10d) avec une membrane perméable à l'air (15) est limitrophe du compartiment intérieur (6), sachant qu'une conduite d'air (12) débouche dans le compartiment de diffusion (10) avec une direction d'écoulement, qui comporte un déflecteur (13) dirigé perpendiculairement à la direction d'écoulement.

2. Ensemble serre selon la revendication 1, ***caractérisé* en ce que** la conduite d'air (12) comporte un diffuseur dans le compartiment de diffusion (10), qui comporte en particulier plusieurs ouvertures (14) disposées dans une paroi périphérique de la conduite d'air (12), qui sont constituées de préférence (14) en forme de fente.

3. Ensemble serre selon la revendication 1 ou 2, ***caractérisé* en ce que** la membrane (15) comporte un matériau textile en tant que composant principal.

4. Ensemble serre selon l'une quelconque des revendications 1 à 3, ***caractérisé* en ce que** la membrane (15) comporte un épaississement (18) sur deux arêtes parallèles, qui viennent en prise dans l'enceinte (2) avec des conduits parallèles (19).

5. Ensemble serre selon la revendication 4, ***caractérisé* en ce que** l'épaississement (18) est disposé sur un élément de maintien relié à la membrane (15).

6. Ensemble serre selon la revendication 3 ou 4, ***caractérisé* en ce que** l'enceinte (2) comporte des montants (4) et les conduits (19) sont disposés dans les montants (4).

7. Ensemble serre selon l'une quelconque des revendications 1 à 6, ***caractérisé en ce* que** le compartiment de diffusion (10) comporte plusieurs sections de compartiment de diffusion (10a-10d) qui sont disposés les uns à côté des autres sur un côté du compartiment intérieur (6).

8. Ensemble serre selon la revendication 7, ***caractérisé* en ce que** chaque section de compartiment de diffusion (10a-10d) comporte une paroi extérieure perméable à l'air (16) en dehors de la membrane imperméable à l'air (15), qui est notamment (16) incurvée et forme de préférence une partie d'une surface d'enveloppe cylindrique.

9. Ensemble serre selon l'une quelconque des revendications 1 à 8, ***caractérisé en ce que*** le compartiment de diffusion (10) est un premier compartiment de diffusion et la conduite d'air (12) une première conduite d'air et un deuxième compartiment de diffusion avec une deuxième conduite d'air (17) est disposé sur un des côtés opposés du compartiment intérieur (6).

10. Ensemble serre portant le releveur de tiges selon la revendication 9, ***caractérisé en ce que*** la première conduite d'air (12) et la deuxième conduite d'air (17) sont reliées par un dispositif d'inversion (20, 21) à un système de transport d'air commun.

11. Procédé d'aération d'un ensemble serre (1) avec une enceinte (2), un compartiment intérieur (6) disposé dans l'enceinte (2) plusieurs étages de plants (3) disposés les uns sur les autres en direction de la force de gravité dans le compartiment intérieur (6) et un système d'éclairage (7) agissant sur les étages de plants (3), sachant que l'on injecte de l'air dans un compartiment de diffusion (10 ; 10a-10d) limitrophe du compartiment intérieur (6), ***caractérisé* en ce que** l'air passe à travers une membrane perméable à l'air du compartiment de diffusion d'air (10 ; 10a-10d) dans le compartiment intérieur (6), sachant que l'on dirige l'air dans le compartiment de diffusion (10 ; 10a-10d) contre un déflecteur (13).

12. Procédé selon la revendication 11, ***caractérisé en ce que*** l'on diffuse l'air dans le compartiment de diffusion (10 ; 10a-10d) par un diffuseur.

13. Procédé selon la revendication 11 ou 12, ***caractérisé en ce que*** l'on inverse de temps en temps l'écoulement d'air dans le compartiment intérieur (6).
